# EUROPEAN PATENT APPLICATION

(11) **EP 2 284 508 A1**
(43) Date of publication of application: **16.02.2011**
(21) Application number: 10172710.5
(22) Date of filing: 12.08.2010
(51) Int. Cl.: G01J 3/02, G01N 21/17, G02B 17/06

(54) **Optical probe preferably for spectrometric analyses**

(30) Priority: 13.08.2009 IT TO20090641
(71) Applicant: SELEX Galileo S.p.A., Campi Bisenzio (IT)
(72) Inventor: Paolinetti, Riccardo, I-50142 Firenze (IT); Calcagni, Claudio, I-50145 Firenze (IT); Capanni, Annalisa, I-59100 Prato (IT); Battistelli, Enrico, I-50125 Firenze (IT)
(74) Representative: Jorio, Paolo

(57) **Abstract**

A probe comprises an external casing (19), an optical illumination circuit (11), and an optical reception circuit (1), at least one of which has a first concave primary mirror (3), a first convex secondary mirror (4) configured for receiving a spectrum from and sending the spectrum to said first concave primary mirror (3), and an active optical mirror element (5) set in series with said first concave primary mirror (3) and said first convex secondary mirror (4) and having a curvature such as to differentiate the optical arms of the conjugate points, a first conjugate point being inside the external casing (19) and a second conjugate point being outside the external casing (19).

## Description

The present invention relates to an improved optical probe, preferably for use on board a drilling and/or inspection head for terrestrial and space uses.

In space applications, such as, for example, in missions for carrying out exploration on the planet Mars, vehicles for conducting stratigraphic analyses of the subsoil are used. A device suitable for conducting said analysis and for being sent to the planet must be both compact to increase exploitation of the transport compartment in the spaceship and integrated in such a way that the stratigraphic analyses can be easily and completely automated and remotely controlled.

In terrestrial applications, a compact optical probe can be used for carrying out both stratigraphic and more in general spectrometric analyses in numerous sites. In particular, it is possible to envisage applications in spectrometric stratigraphic analysis for seeking hydrocarbons or else for verifying the presence in the subsoil of harmful minerals, such as asbestos, during preliminary excavations of major works, for example of road or railway tunnels. Alternatively, it is possible to apply optical heads for spectrometric analysis of waters and/or of rubbish dumps for verifying, especially in the latter case, whether toxic materials are present unduly accumulated even after the dump has been closed and covered over.

For terrestrial applications an important requisite is the miniaturization of the devices, which enables integrations in drilling probes or tools in such a way that the interventions will not be overly invasive. Consequently, it is possible to reduce both the costs and the environmental impact of the interventions of analysis and verification.

The aim of the present invention is to provide an optical probe that is able to meet at least partially the requirements specified above.

The aim of the present invention is achieved via an optical probe according to Claim 1.

The invention will now be described, with reference to the annexed drawings, which illustrate non-limiting examples of embodiment thereof and in which:
- Figures 1 to 3 are respective optical diagrams implemented in an optical probe according to the present invention;
- Figures 4 and 5 are perspective views of two components of an optical probe according to the present invention; and
- Figure 6 is a perspective view of the two components of Figures 4 and 5 in an assembled condition.

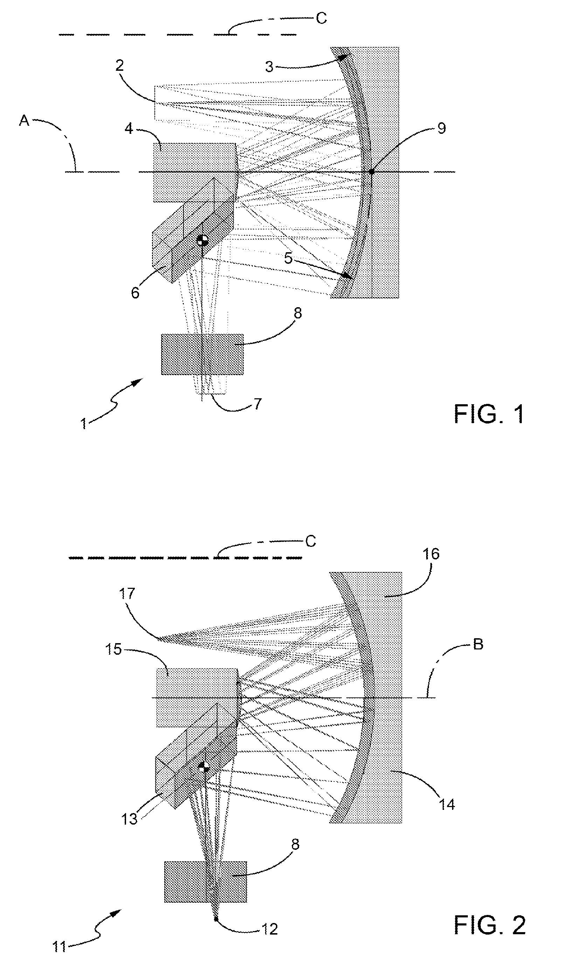

Illustrated in Figure 1 is the diagram of an optical circuit designed to be provided in an optical transfer device mounted within a drilling tool, for example a drilling probe.

In particular, the optical device defines an optical illumination path that receives a beam of rays having a frequency preferably but not exclusively in the visible and near infrared, and an optical reception path that returns a signal suitable for being processed, for example, by a spectrometer (not illustrated) for carrying out a stratigraphic analysis.

Each optical path defines a pair of conjugate points, in particular, an optical fibre that guides the beam of light rays is located on an object point of the illumination path and an image point is located external to the drilling tool. Accordingly, the object point of the reception path is located outside the drilling tool and preferably in the proximity of the image point of the illumination circuit, and the image point of the reception path is located inside the drilling tool and is collected by a second optical fibre connected to the spectrometer.

Figure 1 illustrates the diagram of the optical illumination path 1, which defines an object point 2 illuminated preferably but not exclusively via an optical fibre (not illustrated), a concave primary half-mirror 3, a convex secondary mirror 4, a primary half-mirror 5, set in series to the secondary mirror 4, and a deviation mirror 6, arranged for projecting an image point 7 beyond a window 8 preferably made of sapphire glass.

In particular, starting from the object point 2 the primary half-mirror 3, the secondary mirror 4, the primary half-mirror 5, and the deviation mirror 6 are set in series, and an optical axis A of the primary half-mirror 3 coincides with that of the secondary mirror 4.

The optical axis A intersects the primary half-mirror 3 in a point 9, referred to as "vertex", and the distance in a direction parallel to the optical axis A, referred to as "arm" of the image point 7, in combination with the magnification, depends upon the arm of the object point 2 and the primary half-mirror 5.

In particular, in order to obtain an optical path in a particularly compact device, i.e., having mirrors set close to one another, and at the same time keep both magnifications close to and preferably less than unity and a relatively high arm of the image point 7 in order to be able to illuminate a point outside the drilling tool, the primary half-mirror 5 is a concave mirror and has a radius of curvature less, in absolute value, than that of the primary half-mirror 3. Furthermore, the secondary mirror 4 has an absolute value of the radius of curvature less both than that of the primary half-mirror 3 and than that of the primary half-mirror 5.

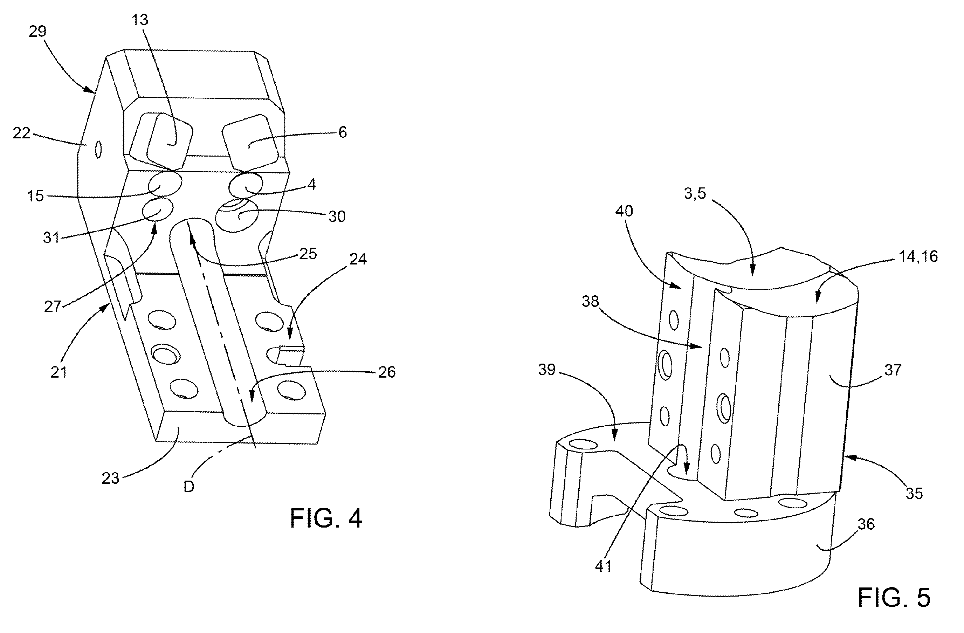

According to a preferred embodiment of the present invention, the primary half-mirror 3 and the primary half-mirror 5 are made on one and the same support 10 (Figure 5) and both have a constant radius of curvature. The mirrors are consequently portions of a spherical surface and have a tangent plane in common passing through the vertex 9. Furthermore, the area of interface between the primary half-mirror 3 and the primary half-mirror 5 presents an appropriate radiusing to reduce to a minimum phenomena of diffusion of the light beam when the rays are reflected.

The deviation element 6 modifies the spatial position of the image point 7 in the example illustrated in such a way that the distance of the image point 7 from the optical axis A is greater than that of the object point 2. Preferably, the image point 7 is located outside or else on the outer surface of the window 8 when a plane perpendicular to the optical axis A and containing the image point 7 is considered. The window 8 has a negligible contribution of chromatic aberration and is envisaged in applications where contaminating agents may damage the device that forms the optical path 1. In particular, the deviation mirror 6 is plane and performs the function of deviating the light through the window 8, which is supported by a side wall of the drilling tool.

Figure 2 is a schematic illustration of a reception path 11 having an object point 12 close to the image point 7 outside the drilling tool, and comprising, in series starting from the object point 12, an active optical element 13, a concave primary half-mirror 14, and a convex secondary mirror 15. The primary half-mirror 14 and the secondary mirror 15 are preferably spherical and have one and the same optical axis B parallel to the optical axis A of the illumination path 1. In the present description and in the claims, the expression "active optical element" refers to a mirror having a curvature such as to modify the form of the wave front of the reflected radiation.

In particular, the secondary mirror 15 has an absolute value of the radius of curvature less than that of the primary half-mirror 14. Furthermore, both the primary half-mirror 14 and the secondary mirror 15 are preferably spherical, and the rays reflected by the secondary mirror 15 are collected by a primary half-mirror 16 that defines an image point 17, set in which is preferably but not exclusively one end of an optical fibre (not illustrated) for collecting the signal and guiding it towards a processing device, for example a spectrometer. The primary half-mirror 16 has the same radius of curvature and the same optical axis B as the primary half-mirror 14.

Preferably, both the optical illumination path 1 and the reception path 11 are obtained via mirrors so as not to present any chromatic aberration, i.e., so as to enable use on the optical paths of rays having different frequencies with negligible impact on the precision of the positioning of the image point as a function of the frequency of the incident rays.

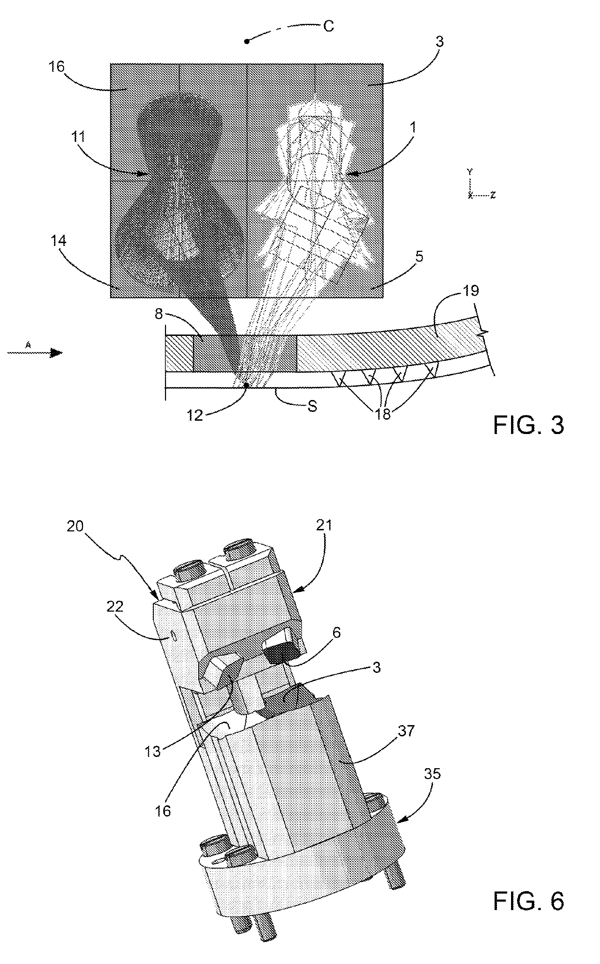

Figure 3 is a schematic illustration of the envelope of the paths of the light rays along the optical paths 1 and 11. In particular, the illumination path 1 is coupled to an optical fibre having a diameter larger than that of the optical fibre coupled to the reception path 11 so as to define an illuminated area having a size greater than the area detected by the object point of the reception path. Furthermore, in order to concentrate more the energy so as to illuminate the area that surrounds the object point 12, the magnification ratio of the illumination path is less than unity, i.e., the lighting rays are concentrated in the area surrounding the object point 12. Preferably, the position of the object point 12 lies on an internal surface S of the hole made as the drilling tool advances in a soil to be analysed. In particular, the drilling tool has an axis of rotation C preferably set at a distance from the optical axes A, B. Theoretically, the surface S coincides with the cylindrical surface identified by the maximum diameter of cutting elements 18 of the drilling tool, the external casing of which is designated by the number 19 and is illustrated schematically once again in Figure 3.

Figures 4, 5, and 6 illustrate an optical transfer device 20 incorporating the optical paths 1 and 11 and two components of the latter.

In particular, the mirrors 3, 4, 5, 6, 13, 14, 15, 16 are made in a monolithic way on a corresponding support; i.e., a block is machined directly with removal of stock, for example with removal of chips using a single-point diamond machine, in order to shape and obtain the surfaces ready for use of the mirrors described above on board a single machine. In this way, the position of the mirrors is fixed and precise when the supports are connected to one another, and this maintains, in spite of the small dimensions, a high fidelity of the images that can be analysed with the optical device 20. Furthermore, each support can be made of materials having coefficients of thermal expansion that are substantially equal or else of a combination of materials having different coefficients of thermal expansion but capable of compensating one another in such a way that the optical device 20 has as a whole a thermal expansion in the three orthogonal directions that is uniform and is such as to have a minimal impact on the relative position of the mirrors.

Figure 4 shows a monolithic body 21 made preferably of aluminium and defining the deviation element 6, the primary half-mirror 16, and the secondary mirrors 4, 15. The monolithic body 21 comprises a head 22 and a reference wall 23 defining a plane surface 24, with respect to which the head 22 juts out. The monolithic body 21 defines a hole 25 that traverses the head 22 and has an axis D parallel to the plane surface 24. In particular, the hole 25 proceeds also along the reference wall 23, on which it defines a rectilinear impression 26 having a cross section shaped like an arc of circumference.

The head 22 has a substantially parallelpipedal overall shape and defines a surface 27 perpendicular to the axis D and adjacent to the plane surface 24, a recess 28 delimited by rectilinear surfaces having generatrices perpendicular to the axis D, and a plane surface 29 opposed to the surface 27 with respect to the recess 28.

The convex surfaces that define the secondary mirrors 4, 15 jut out with respect to the surface 27. Two elements defining the deviation element 6 and the primary half-mirror 16 protrude within the recess 28.

The head 22 moreover defines a first through hole 30 and a second through hole 31 having respective axes parallel to the axis D and lying on the object point 2 and image point 17. The optical axes A, B, the respective centres about which the surfaces that define the deviation element 6 and the primary half-mirror 16 are rotated in space, and the axes of the holes 30, 31 lie in respective preferably mutually parallel planes.

Figure 5 illustrates a base 35 comprising a fixing flange 36 and a support 37 coming out perpendicularly from the flange 36 and having a substantially rectangular cross section. The support 37 has a rectilinear impression 38, which is perpendicular to the flange 36 and has a cross section shaped like an arc of circumference. Furthermore, the flange 36 delimits a face 39 jutting out with respect to a plane surface 40 of the support 37 on which the impression 38 is made. The flange 36 moreover defines a through hole 41 coaxial to the impression 38.

On the opposite longitudinal side of the flange 36, the support 37 defines the primary half-mirror 3, the active optical element 6, the primary half-mirror 14, and the primary half-mirror 16. Figure 6 illustrates the monolithic body 21 and the base 35 in a condition where they are assembled together. In particular, the plane surfaces 24 and 40 define a calibrated reference means that defines the relative position between the mirrors in three degrees of freedom. Furthermore, the rectilinear impressions 25 and 38 can be coupled to a pin (not illustrated) configured in such a way as to block the remaining three degrees of freedom. In particular, two degrees of freedom are blocked on account of the shape fit between the pin, the hole 25, the hole 41, and the rectilinear impressions 25 and 38. The remaining degree of freedom, i.e., the one regarding translation parallel to the axes A, B, D is blocked thanks to appropriate fixing screws between the reference wall 24 and the support 37. The reference means for defining in a precise way the relative position of the monolithic body 21 on the base 35 is defined by the contrast between the face 39 and a free end portion of the reference wall 23.

The ensemble of the monolithic body 21, with the base 35, defines a particularly compact optical device having a major dimension, i.e., the dimension measured along the axis D, of less than 40 mm.

The advantages of the optical transfer device 20 described and illustrated herein and of the probe defined by the casing 19, within which the optical device 20 is mounted, are presented in what follows.

The presence of a mirror active in at least one of the two paths enables differentiation of the length of the arms of the conjugate points so as to be able to miniaturize the device and at the same time enable focusing/illumination of a point on the outside of a protective casing, within which the device is housed. In particular, the optical configuration according to the present invention is freed from the Gaussian relationship between the position of the input conjugate and the position of the output conjugate by inserting one or more active optical elements in the optical path.

The use of mirrors enables optical transport, with high degrees of precision, of very wide wave spectra, from the ultraviolet to the infrared.

The particularly small dimensions enable the optical device 20 to be incorporated on board a tool so as to be able to carry out analyses without requiring extraction of the tool, i.e., keeping the tool in position, so as to increase the possibility of automation and integration. In particular, when the optical device 20 is mounted within a drilling tool, it is possible to sample the surface of the hole whilst the latter is excavated by the tool itself. Thanks to the particularly small dimensions, the sampling can be performed with a discretization of up to 0.1 mm. Furthermore, the tool on which the device is mounted can turn to enable a sampling of the internal surface of the hole both in a circumferential direction and in an axial direction. Consequently, the analyses can be performed in field and in real time.

The mirrors that make up the optical paths 1, 11 are made monolithically on the respective supports without interposition of adjustment means. In this way, it is possible to achieve particularly high precision in combination with small dimensions. In particular, when they are made monolithically on one and the same support, the mirrors of the optical paths 1, 11 are positioned with respect to one another with maximum precision. In fact, the optical axes are defined by the geometry of the surfaces that are machined in succession on one and the same support, which is defined by the head 21 and by the base 35. Preferably, the mirrors 3, 4, 5, 6, 13, 14, 15, 16 are made in succession on a machine with removal of chips on which the semi-finished product is blocked and subsequently released only after all the mirrors have been prepared. In this way, the errors of alignment can be reduced to a minimum because it is not necessary to mount the individual mirrors and then adjust the relative position thereof.

Furthermore, the conformation of the supports 21, 35 is such that the mirrors can be made on a high-precision machine, such as a single-point diamond machine, without the mirrors being taken down from the clinching device of the diamond machine, which fixes the position of the semi-finished product during machining with removal of chips. In particular, the shape of the semi-finished product must not present undercuts or other shapes that prevent the tool from accessing the surface to be machined. For instance, a suitable shape is the convex one of the support, in particular the one illustrated for the base 35. The monolithic body 21 has a convex portion, which protrudes from the reference wall 24.

Furthermore, the formation on supports made of one and the same material enables reduction to a minimum of the distortion of the mirrors due to thermal expansion. In particular, thermal expansion is homogeneous, and this enables at least partial compensation of the contributions in such a way that the distances between the mirrors are kept within very restricted ranges as the temperature varies.

Each support is moreover mounted in a precise way notwithstanding the small dimensions via rigid shape-fit couplings, preferably via pin couplings.

Finally, it is clear that modifications or variations may be made to the optical transfer device 20 and to the corresponding probe described and illustrated herein, without thereby departing from the sphere of protection, as defined in the annexed claims.

Depending upon the applications, the sapphire-glass window 18 can be removed, for example if it is necessary to inspect tubes, or more in general if the environment to be inspected does not have any contaminating agents.

Furthermore, it is possible for just one of the two paths to be provided in the optical device 20 depending upon the purposes of use.

The ratios between the radii of curvature can be different from the ones described. Spherical surfaces are simpler to produce. In any case, the surfaces of the mirrors and of the active optical elements are surfaces of rotation generated by conics. Each conic is defined by an equation that, in canonical form, has a plurality of coefficients and a constant term. The mirrors that form the reception path 1 and the illumination path 11 are different from one another in such a way that at least one between the coefficients and the constant term of the equations in canonical form is different so as to define a difference between the arms of the conjugate points for each optical path. In other words, the surfaces of the mirrors may be either spherical surfaces or aspherical surfaces different from one another (obtained by rotation of a conic about one or more axes).

The magnification ratio both of the reception path 1 and of the illumination path 11 can be varied, depending upon the applications, around unity, preferably between 0.5 and 2, even more preferably between 0.7 and 1.5.

## Claims

1. A probe comprising an external casing (19), an optical illumination circuit (11), and an optical reception circuit (1), at least one of which has a first concave primary half-mirror (3), a first convex secondary mirror (4) configured for receiving a spectrum from said first concave primary half-mirror (3), and an active optical mirror element (5), set in series to said first concave primary half-mirror (3) and said first convex secondary mirror (4), said first concave primary half-mirror (3), said first convex secondary mirror (4) and said active optical element (5) being areas of respective spherical and aspherical surfaces generated by different conic equations so as to differentiate the optical arms of the conjugate points; and a first conjugate point being inside said external casing (19) and a second conjugate point being outside said external casing (19).

2. The probe according to Claim 1, **characterized in that** also the other between the optical illumination circuit (11) and the optical reception circuit (1) comprises a second concave primary half-mirror (14), a second convex secondary mirror (15), configured for receiving a spectrum from said second concave primary half-mirror (14), and a second active optical mirror element (13) set in series to said second concave primary half-mirror (14) and said second convex secondary mirror (15),
said second concave primary half-mirror (14), said second convex secondary mirror (15), and said second active optical element (13) being second areas of respective spherical and aspherical surfaces generated by different conic equations so as to differentiate the optical arms of a third conjugate point and a fourth conjugate point; and said third conjugate point being inside said external casing (19) and said fourth conjugate point being outside said external casing (19).

3. The probe according to any one of the preceding claims, **characterized in that** it comprises a window (8) made of a material transparent to the spectrum to be detected, at least one of said conjugate points being either on an outer surface of or outside said window (8).

4. The probe according to any one of the preceding claims, **characterized in that** the magnification of said illumination circuit (11) is less than 1.

5. The probe according to any one of the preceding claims, **characterized in that** at least said first concave primary mirror (3) and said first convex secondary mirror (4) have distances fixed with respect to one another and can rigidly rotate about an axis (C).

6. The probe according to any one of the preceding claims, **characterized in that** at least said first primary mirror (3) and said first secondary mirror (4) are made monolithically on respective supports (35, 21).

7. The probe according to Claims 6, **characterized in that** at least said first convex secondary mirror (4) and said active optical element (5) are made monolithically on one and the same support (21).

8. The probe according to either Claim 6 or Claim 7, **characterized in that** said supports (35, 21) can be rigidly connected via a shape fit.

9. The probe according to any one of Claims 6 to 8, **characterized in that** said supports (35, 21) are made of one and the same material.

10. An assembly for spectrometric analysis comprising a probe according to any one of the preceding claims and a spectrometer for processing the signal acquired via said probe.
